# EUROPÄISCHE PATENTSCHRIFT

(11) **EP 2 019 791 B1**
(45) Veröffentlichungstag und Bekanntmachung des Hinweises auf die Patenterteilung: **16.03.2011**
(21) Anmeldenummer: 06753749.8
(22) Anmeldetag: 19.05.2006
(51) Int. Cl.: B65D 47/08, B29C 45/00

(54) **VERFAHREN ZUR HERSTELLUNG EINER VERSCHLUSSVORRICHTUNG FÜR EINEN BEHÄLTER**
METHOD OF PRODUCING A CLOSURE DEVICE FOR A CONTAINER
PROCÉDÉ DE FABRICATION D'UN DISPOSITIF DE FERMETURE POUR UN RÉCIPIENT

(43) Veröffentlichungstag der Anmeldung: 04.02.2009
(73) Patentinhaber: Seaquist-Löffler Kunststoffwerk GmbH, 94078 Freyung (DE)
(72) Erfinder: LENZ, Franz, 94146 Hinterschmieding (DE); JÄCKEL, Gerhard, F. K., 94078 Freyung (DE)
(74) Vertreter: Appelt, Christian W.
(86) Internationale Anmeldenummer: PCT/EP2006/004775
(87) Internationale Veröffentlichungsnummer: WO 2007/134618

(56) Entgegenhaltungen:
- EP-A- 1 582 475
- WO-A-02/060776
- FR-A1- 2 804 089
- US-A- 5 934 514

## Beschreibung

Die Erfindung betrifft ein Verfahren zur Herstellung einer Verschlussvorrichtung für einen Behälter, insbesondere Flaschen, wobei diese Verschlußvorrichtung ein Basiselement, das auf einer Öffnung des Behälters befestigbar ist, und einen Klappdeckel umfaßt, der schwenkbar an dem Basiselement befestigt ist, so daß diese zwischen einer geschlossenen und einer geöffneten Stellung hin- und herbewegbar ist, um die Abgabe insbesondere eines fließfähigen Mediums aus der Flasche zu ermöglichen.

Verschlußvorrichtungen sind in mannigfaltiger Form bekannt und üblicherweise aus einem Kunststoffmaterial hergestellt. Ein Basiselement umfaßt typischerweise eine Vorrichtung zum Befestigen des Basiselements an einer Öffnung des Behälters, beispielsweise an einem Flaschenhals, wobei beispielsweise ein Innengewinde vorgesehen werden kann, so daß die Verschlußvorrichtung auf den Flaschenhals aufgeschraubt werden kann.

Von dem Basiselement erstreckt sich häufig ein domförmiger Ausguß, der beispielsweise auch beim Trinken aus dem Behälter vom Mund der trinkenden Person umschlossen werden kann.

Aus der EP 1 582 475 A1 ist eine Verschlussvorrichtung bekannt, die ein Basiselement, ein Befestigungselement und ein domförmig ausgebildetes Abgabelement mit einer Abgabeöffnung umfasst, wobei ferner ein Klappdeckel vorgesehen ist, der einen im wesentlichen ringförmigen Vorsprung aufweist, der in die Abgabeöffnung eingreift, wenn sich der Klappdeckel in einer geschlossenen Position befindet. Die Verschlussvorrichtung umfasst ein Gelenkelement, das zwei voneinander beabstandete Schwächungslinien umfasst, die ein Öffnen des Klappdeckels ermöglichen.

Weitere Verschlussvorrichtungen sind aus der FR 2 804 089, der WO 02/060776 A1 und der US 5,934,514 bekannt.

Es ist eine Aufgabe der vorliegenden Erfindung, ein verbessertes Verfahren zur Herstellung einer Beschlussvorrichtung zur Verfügung zu stellen, bei der insbesondere das Schließen des Klappdeckels besonders einfach durchgeführt werden kann, wobei gleichzeitig sichergestellt ist, daß bei einem geschlossenen Deckel die Abgabeöffnung dicht verschlossen ist, ferner aber auch bei wiederholtem Öffnen und Schließen die jeweiligen Dichtelemente vor Beschädigungen bewahrt werden können.

Diese Aufgabe wird durch ein Verfahren gemäß Anspruch 1 gelöst, die Ansprüche 2 und 3 betreffen besonders vorteilhafte Ausführungsformen dieses Verfahrens.

Das Basiselement ist zweiteilig ausgebildet und umfaßt zum einen ein im wesentlichen ringförmiges Befestigungselement und zum anderen ein im wesentlich domförmig ausgebildetes Abgabeelement, das mit einer Abgabeöffnung versehen ist und das in das Basiselement eingesetzt wird. Ferner umfaßt der Klappdeckel der Verschlußvorrichtung einen im wesentlichen ringförmigen Vorsprung (teilweise auch Schulter genannt), der so ausgebildet ist, daß er in einem geschlossenen Zustand des Klappelements in die Abgabeöffnung des Abgabeelements eingreift und die Abgabeöffnung dadurch abschließt.

Schließlich ist der Klappdeckel mittels einer Scharniervorrichtung, die mindestens zwei voneinander unabhängige Schwenkachsen zur Verfügung stellt, die voneinander beabstandet sind, an dem Basiselement befestigt.

Die oben beschriebene Kombination von Merkmalen hat den Vorteil, daß bei einem geschlossenen Klappdeckel eine sehr sichere Abdichtung der Abgabeöffnung sichergestellt ist, ferner jedoch beim Schließen des Klappdeckels mittels einer Schwenkbewegung insbesondere durch das Vorsehen zweier voneinander beabstandeter, unabhängiger Schwenkachsen eine Bewegung des Klappdeckels möglich ist, die einen Verschleiß der abdichtenden Elemente, nämlich des ringförmigen Vorsprungs einerseits und damit wechselwirkender Elemente des Abgabeelements andererseits, vermeidet oder sehr stark verringert.

Insbesondere durch das Vorsehen der zwei voneinander beabstandeten, unabhängigen Schwenkachsen kann eine Relativbewegung der oben beschriebenen Dichtelemente, also des ringförmigen Vorsprungs einerseits und der damit wechselwirkenden Elemente des Abgabeelements andererseits, realisiert werden, die von einer reinen Kreisbewegung, die bei lediglich einer Schwenkachse vorliegen würde, abweicht, so daß beim Aufsetzen des Deckels und beim Abdichten geringere Deformationen notwendig sind und damit ein geringere Verschleiß sichergestellt wird.

Das zusätzliche Vorsehen eines zweiteiligen Basiselementes, das ein ringförmiges Befestigungselement einerseits und ein im wesentlich domförmig ausgebildetes Abgabeelement andererseits umfaßt, ermöglicht ferner, das Befestigungselement und den Klappdeckel in einem Spritzgußverfahren separat von dem Abgabeelement herzustellen, den Klappdeckel in die geschlossene Position zu bringen und erst nachfolgend das Abgabeelement in das Befestigungselement des Basiselements einzusetzen. Dies hat den Vorteil, daß insbesondere beim Herstellungsverfahren, also beim ersten Vorgang, in dem die Verschlußvorrichtung in einen dichten Zustand gebracht werden muß, das Abgabeelement in einer linearen Bewegung von unten eingesetzt werden kann, also keine kreisförmige Komponente der Bewegung beim Schließvorgang erforderlich ist, was den geringstmöglichsten Verschleiß und eine hohe Dichtigkeit sicherstellt.

Die Kombination der oben beschriebenen Merkmale hat insbesondere den Vorteil, daß gerade beim Herstellungsverfahren eine hohe Dichtigkeit erzielt werden kann, was von besonderer Bedeutung ist, weil gerade die Dichtigkeit im Herstellungsprozeß, also vor dem ersten Öffnen durch den Nutzer, besonders wichtig ist, um ein Austreten von Flüssigkeit aus dem Behälter, beispielsweise während des Transports der gefüllten Behälter zu den Verkaufsstellen zu vermeiden. Da insbesondere sichergestellt werden kann, daß beim Herstellungsverfahren kein Verschleiß oder eine fehlerhafte Positionierung einzelner Elemente vorkommt, ferner bevorzugt unterschiedliche Materialien verwendet werden, wobei eines der Materialien weicher ist, ist es auch möglich, auf ein zusätzliches Dichtelement, beispielsweise eine Dichtscheibe, die bei manchen Verschlußvorrichtungen vorgesehen sein muß und die auf die Öffnung des Behälters direkt aufgelegt und durch die Verschlußvorrichtung befestigt wird, zu verzichten.

Bei einer bevorzugten Ausführungsform verlaufen die Schwenkachsen im wesentlichen parallel zueinander, wobei bevorzugt der Abstand der Schwenkachsen mindestens 5%, bei einer besonders bevorzugten Ausführungsform mindestens 10% oder sogar 15% des Durchmessers der Verschlußvorrichtung oder der Öffnung des Behälters beträgt.

Bevorzugt werden die beiden Schwenkachsen durch ein Hauptscharnier einerseits und durch ein Filmscharnier andererseits realisiert, es ist aber auch möglich, zwei im wesentlichen identische Scharniere vorzusehen.

Das Hauptscharnier ist so ausgebildet, daß ein Schwenkbereich von mindestens 90°, bevorzugt 120°, und bei einer besonders bevorzugten Ausführungsform 180° oder mehr ermöglicht, während ein zweites Scharnier, bevorzugt ein Filmscharnier, lediglich einen geringeren, zusätzlichen Schwenkbereich, beispielsweise +/- 20° oder +/- 30° ermöglicht, um eine "Feinanpassung" der Bewegung zu ermöglichen. Das Hauptscharnier mit dem größeren Schwenkbereich dient daher gleichsam im wesentlichen der Öffnungsbewegung des Klappdeckels, während das zweite Scharnier, bevorzugt ein Filmscharnier, mit einem geringeren Schwenkbereich, gegebenenfalls für den Benutzer im wesentlichen unmerklich, eine Feinanpassung der Positionierung des Klappdeckels beziehungsweise des darin angeordneten ringförmigen Vorsprungs (der Schulter) relativ zur Abgabeöffnung im wesentlichen automatisch steuert, nämlich dem geringsten Widerstand folgend, so daß ein Verschleiß weitgehend vermieden wird.

Dies ist insbesondere bei einer besonders bevorzugten Ausführungsform von Bedeutung, bei der das Abgabeelement aus einem anderen Material hergestellt ist als das Befestigungselement, insbesondere aus einem elastischeren oder weicheren Material, wobei es auch vorgesehen sein kann, ein, zumindest teilweise, plastisch verformbares Material vorzusehen.

Bei einer bevorzugten Ausführungsform bestehen das Basiselement und der Klappdeckel entweder aus Polypropylen PP oder Polyethylen PE. Das Abgabeelement kann ebenfalls aus PP oder PE bestehen, wobei bei einer bevorzugten Ausführungsform das Basiselement und der Klappdeckel aus PP und Abgabeelement aus PE hergestellt sind.

Bei einer bevorzugten Ausführungsform umfaßt das im wesentlichen domförmige Abgabeelement an seinem äußeren beziehungsweise oberen Ende der Abgabeöffnung Dichtlippen, die bevorzugt innen angeordnet sind, so daß diese Dichtlippen bei einem geschlossenen Zustand des Klappdeckels an dem in die Abgabeöffnung hineinragenden ringförmigen Vorsprung anliegen, um eine hohe Dichtigkeit herzustellen. Bevorzugt sind diese Dichtlippen u-förmig ausgebildet, wobei sie sich bevorzugt nach innen und unten, also von der äußeren Abgabeöffnung entfernt, in Richtung auf den inneren Bereich der domförmigen Erhebung und damit in Richtung auf die Öffnung des Behälters erstrecken.

Bei einer besonderen Ausführungsform ist der ringförmige Vorsprung des Klappdeckels im wesentlichen konusförmig ausgebildet, so daß dieser einen sogenannten Dichtkonus bildet. Die konusförmige Ausführungsform hat insbesondere den Vorteil, daß beim Schließen des Klappdeckels eine automatische Zentrierung und Anpassung der Position, insbesondere auch unter Ausnutzung der Schwenkbereiche beider Scharniere sichergestellt wird, was ebenfalls Beschädigungen und Verschleiß vermeidet, und dadurch eine hohe Dichtigkeit, auch bei wiederholtem Öffnen und Schließen des Klappdeckels, sicherstellt.

Bei einer bevorzugten Ausführungsform umfaßt das Abgabeelement ferner ein zusätzliches Membranventil, das bevorzugt in dem Abgabeelement befestigt ist. Ein solches Membranventil kann jedoch auch an anderer Position vorgesehen sein, beispielsweise in dem Basiselement.

Erfindungsgemäß wird ein Verfahren zur Verfügung gestellt, bei dem das ringförmige Befestigungselement des Basiselements und der Klappdeckel einteilig und in einem offenen Zustand hergestellt werden, bevorzugt in einem Spritzgußverfahren, nachfolgend der Klappdeckel in seinem geschlossenen Zustand gebracht wird und erst dann das Abgabeelement in das Basiselement eingesetzt wird. Dadurch wird, insbesondere beim ursprünglichen Herstellungsverfahren und beim ersten "Abdichtungsprozeß", sichergestellt, daß das Abgabeelement lediglich in einer im wesentlichen linearen Bewegung in das ringförmige Befestigungselement des Basiselements eingesetzt werden kann, der ringförmige Vorsprung wird daher geradlinig und exakt in das

Befestigungselement eingesetzt, so daß eine Deformation des domförmigen Abgabeelements soweit wie möglich vermieden wird, mit anderen Worten lediglich eine Deformation stattfindet, die für das sichere Abdichten erforderlich ist.

Bevorzugt werden das ringförmige Befestigungselement und der Klappdeckel in einem Spritzgußverfahren einteilig hergestellt, auch für das Abgabeelement bietet sich ein Spritzgußverfahren an. Bei einer besonders bevorzugten Ausführungsform findet das Einsetzen des Abgabeelements in das "geschlossene System", ringförmiges Befestigungselement und Klappdeckel, zu einem Zeitpunkt statt, in dem das Abgabeelement noch nicht vollständig auskristallisiert ist.

Diese und weitere Merkmale und Vorteile der Erfindung werden anhand der beigefügten Zeichnungen, die schematisch eine besondere Ausführungsform der erfindungsgemäßen Verschlußvorrichtung zeigen:
- Fig. 1: zeigt eine erste Ausführungsform einer Verschlußvonichtung in ihrem geöffneten Zustand;
- Fig. 2: zeigt die in Figur 1 gezeigte Ausführungsform mit einem teilweise geschlossenen Klappdeckel; und
- Fig. 3: zeigt die in Figur 1 gezeigten Elemente, wobei das Abgabeelement noch nicht in das ringförmige Befestigungselement eingesetzt ist.

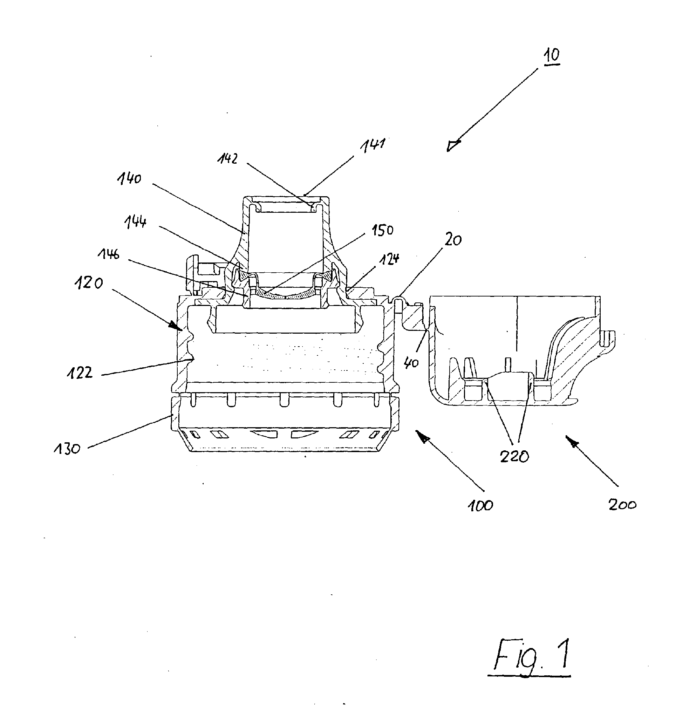

Figur 1 zeigt eine erste Ausführungsform einer Verschlußvorrichtung 10 für einen Behälter (nicht gezeigt) mit einem Basiselement 100, das ein ringförmiges Befestigungselement 120 und ein Abgabeelement 140 umfaßt, und einem Klappdeckel 200, wobei sich der Klappdeckel 200 in seiner geöffneten Position befindet und um ca. 180° aus seiner geschlossenen Position verschwenkt ist.

Das Befestigungselement 120 des Basiselements 100 ist mit einem Innengewinde 122 versehen, so daß dies auf eine entsprechende Öffnung des Behälters, insbesondere einen Flaschenhals, aufgeschraubt werden kann. Ferner umfaßt das Befestigungselement 120 ein Originalitätssicherheitsband 130, das an seinem unteren Ende angeordnet ist.

Einteilig ausgebildet mit diesem Befestigungselement 120 ist ein Klappdeckel 200, wobei dieser mittels zweier Scharniervorrichtungen, einem Hauptscharnier 20 und einem Filmscharnier 40, an dem Befestigungselement 120 befestigt ist. Über das Hauptscharnier 20 wird die Verschwenkung des Klappdeckels um 180° sichergestellt, während sich das Filmscharnier 40 bei der in Fig. 1 gezeigten Stellung in seiner neutralen Position befindet, wobei es durch Belastung um einen zusätzlichen Winkelbereich von ca. +/- 20° geschwenkt werden kann, unabhängig von der Position oder der Stellung des Hauptscharnier 20.

Ein Abgabeelement 140, das als von dem ringförmigen Befestigungselement 120 eigenständiges Teil hergestellt ist, ist in eine Öffnung 124 des ringförmigen Befestigungselements 120 eingesetzt und hieran befestigt. Das Abgabeelement 140 ist im wesentlichen domförmig ausgebildet, mit einer Außenkontur, die sich nach oben hin verjüngt.

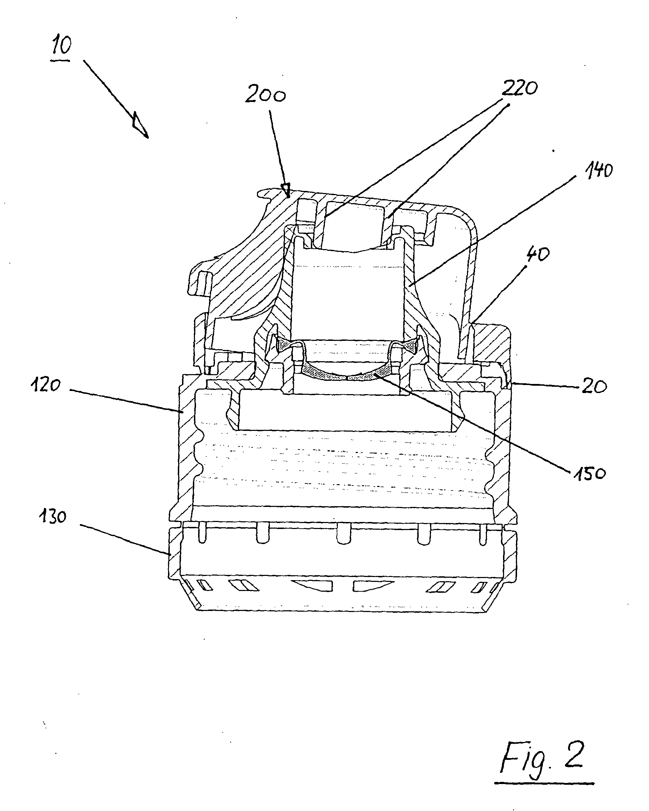

In der Nähe der Abgabeöffnung 141 des Abgabeelements 140 ist auf der Innenseite eine Dichtlippe 142 angeordnet, die sich im wesentlichen u-förmig nach innen und nach unten erstreckt, so daß bei einem Schließen des Deckels diese Dichtlippen 142 mit zugehörigen Elementen des Klappdeckels zusammenwirken können, siehe insbesondere Fig. 2.

Ferner ist bei dieser Ausführungsform in das Abgabeelement 140 ein Membranventil 150 eingebracht worden, das mittels eines Befestigungselements 146 sicher in dem Abgabeelement 140 gehalten wird.

Der Klappdeckel 200 umfaßt einen im wesentlichen ringförmigen Vorsprung 220, der auf einer Innenseite des Klappdeckels angeordnet ist, wobei dieser ringförmige Vorsprung 220 so ausgebildet ist, daß er in einem geschlossenen Zustand mit dem Abgabeelement 140 für eine Abdichtung der Abgabeöffnung 161 zusammenwirkt, siehe hier insbesondere Figur 2.

Figur 2 zeigt die in Figur 1 dargestellte Ausführungsform eines Abgabeverschlusses, bei der sich jedoch der Klappdeckel 200 in einer nahezu geschlossenen Position befindet. In dieser Position greift der ringförmige Vorsprung 220 bereits in die Abgabeöffnung 141 des Abgabeelements 140 ein und liegt an der Dichtlippe 142 des Abgabeelements 140 an.

Figur 2 zeigt insbesondere deutlich die durch die zwei verschiedenen Schwenkachsen mögliche Feinpositionierung des Klappdeckels, wobei in der in Figur 2 gezeigten Position das Hauptscharnier 20 sich im wesentlichen bereits in seiner geschlossenen Position befindet, wohingegen das Filmscharnier aus seiner neutralen Stellung herausbewegt ist, so daß das Oberteil des Klappdeckels nach wie vor leicht gegenüber dem Basiselement und dem Abgabeelement verkippt ist. Hierdurch wird sichergestellt, daß das Abgabeelement nur sehr geringfügig "deformiert" werden muß, was, wie erläutert, einen sehr geringen Verschleiß und eine hohe Dichtigkeit auch nach mehrmaligem Öffnen und Schließen des Klappdeckels sicherstellt.

Zur Vermeidung von Wiederholungen wird im Hinblick auf die sonstigen Elemente auf die Beschreibung zu Figur 1 verwiesen.

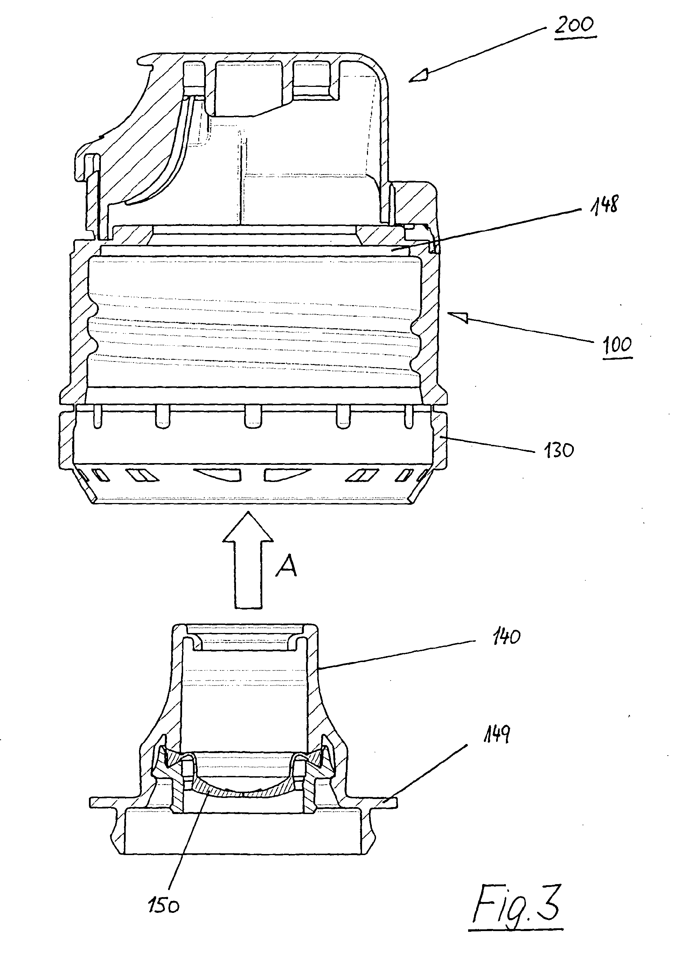

Figur 3 zeigt eine weitere Ausführungsform einer Verschlußvorrichtung, wobei sich in dieser Darstellung der Klappdeckel 200 in einer vollständig geschlossenen Position befindet, während Figur 3 ferner zeigt, wie beim erfindungsgemäßen Herstellungsverfahren das Abgabeelement 140 erst eingesetzt wird (siehe Pfeil A), wenn sich der Klappdeckel in seiner geschlossenen Position befindet, um hier insbesondere im Herstellungsverfahren eine Deformierung des Abgabeelementes, die über die zur Abdichtung notwendige Deformierung hinausgeht, zu vermeiden.

Ferner stellt der obere Teil der Fig. 3 eine Komponente für eine Verschlußvorrichtung dar, die das ringförmige Befestigungselement 120 und den Klappdeckel 200, nicht aber das Abgabelement 140 umfaßt und die ggf. einzeln auf dem Markt angeboten und verkauft wird, so daß nachfolgend Abgabeelemente 140 in die entsprechende Komponente für die Verschlußvorrichtung eingesetzt werden können. Deutlich ist in Fig. 3 auch eine Ausnehmung 148 gezeigt, in die ein entsprechendes Gegenelement 149 des Abgabeelements eingesetzte werden kann.

## Patentansprüche

1. Verfahren zum Herstellen einer Verschlußvorrichtung (10) für einen Behälter mit einem Basiselement (100), das auf einer Öffnung des Behälters befestigbar ist, und einem Klappdeckel (200), der schwenkbar an dem Basiselement (100) befestigt ist und zwischen einer geschlossenen und einer geöffneten Stellung hin- und herbewegbar ist, wobei das Basiselement (100) zweiteilig ausgebildet ist und ein im wesentlichen ringförmiges Befestigungselement (120) umfasst, in das ein im wesentlichen domförmig ausgebildetes Abgabelement (140) mit einer Abgabeöffnung (141) eingesetzt wird, **dadurch gekennzeichnet, daß** das ringförmige Befestigungselement (120) des Basiselements (100) und der Klappdeckel (200) einteilig und in offenem Zustand hergestellt werden, nachfolgend der Klappdeckel (200) in eine geschlossene Position gebracht wird, und erst dann das Abgabeelement (140) in das ringförmige Befestigungselement (120) eingesetzt (A) wird.

2. Verfahren zum Herstellen einer Verschlußvorrichtung (10) nach Anspruch 1, **dadurch gekennzeichnet, daß** das ringförmige Befestigungselement (120) des Basiselements (100) und der Klappdeckel (200) und/oder das Abgabeelement (140) im Spritzgußverfahren hergestellt werden.

3. Verfahren zum Herstellen einer Verschlußkappe (10) nach Anspruch 1 oder 2, **dadurch gekennzeichnet, daß** das Einsetzen des Abgabeelements (140) zu einem Zeitpunkt erfolgt, in dem das Abgabeelement (140) nach seiner Herstellung noch nicht vollständig abgekühlt ist.

## Claims

1. Method for producing a closure device (10) for a container having a base element (100), which can be fastened on an opening of the container, and a hinged cap (200), which is pivotably fastened to the base element (100) and can be moved to and fro between a closed and open setting, wherein the base element (100) is configured in two parts and comprises a substantially annular fastening element (120), in which a substantially dome-shaped dispensing element (140) having a dispensing opening (141) is inserted, **characterized in that** the annular fastening element (120) of the base element (100) and the hinged cap (200) are produced in one piece and in an open state, whereafter the hinged cap (200) is brought into a closed position and only then is the dispensing element (140) inserted (A) into the annular fastening element (120).

2. The method of producing a closure device (10) as claimed in claim 1, **characterized in that** the annular fastening element (120) of the base element (100) and the hinged cap (200) and/or the dispensing element (240) are produced by injection molding.

3. The method of producing of a closure device (10) as claimed in claim 1 or 2, **characterized in that** the insertion of the dispensing element (140) takes place at the moment in which the dispensing element (140) is not yet fully cooled after its production.

## Revendications

1. Procédé pour fabriquer un dispositif de fermeture (10) pour un conteneur, comportant un élément de base (100) qui peut être fixé sur une ouverture du conteneur, et un bouchon articulé (200) qui est fixé sur l'élément de base (100) de manière à pouvoir pivoter et qui peut être déplacé en va-et-vient entre une position fermée et une position ouverte, dans lequel l'élément de base (100) est configuré en deux parties et comporte un élément de fixation sensiblement annulaire (120) dans lequel est introduit un élément de distribution (140) sensiblement configuré en forme de dôme ayant une ouverture de distribution (141), **caractérisé en ce que** l'élément de fixation annulaire (120) de l'élément de base (100) et le bouchon articulé (200) sont fabriqués d'un seul tenant et dans un état ouvert, puis le bouchon articulé (200) est amené dans une position fermée et l'élément de distribution (140) est ensuite introduit (A) dans l'élément de fixation annulaire (120).

2. Procédé pour fabriquer un dispositif de fermeture (10) selon la revendication 1, **caractérisé en ce que** l'élément de fixation annulaire (120) de l'élément de base (100) et le bouchon articulé (200) et/ou l'élément de distribution (140) sont fabriqués dans un procédé de moulage par injection.

3. Procédé pour fabriquer un dispositif de fermeture (10) selon la revendication 1 ou 2, **caractérisé en ce que** l'introduction de l'élément de distribution (140) a lieu à un moment où l'élément de distribution (140) n'est pas encore totalement refroidi après sa fabrication.
